# FASCICULE DE BREVET EUROPEEN

(11) **EP 2 922 712 B1**
(45) Date de publication et mention de la délivrance du brevet: **16.05.2018**
(21) Numéro de dépôt: 13779593.6
(22) Date de dépôt: 21.10.2013
(51) Int. Cl.: B60C 23/04

(54) **PROCEDE ET SYSTEME DE SURVEILLANCE DE PRESSION DES PNEUMATIQUES D'UN VEHICULE AUTOMOBILE**
REIFENDRUCKÜBERWACHUNGSVERFAHREN UND -VORRICHTUNG FÜR EIN KRAFTFAHRZEUG
TIRE PRESSURE MONITORING METHOD AND SYSTEM FOR A VEHICLE

(30) Priorité: 23.11.2012 FR 1261179
(43) Date de publication de la demande: 30.09.2015
(73) Titulaire: Renault S.A.S., 92100 Boulogne-Billancourt (FR)
(72) Inventeur: SAINT-LOUP, Philippe, F-78760 Jouars Pontchartrain (FR); MONTI, Alessandro, F-92250 La Garenne Colombes (FR); GUILLEREY, Bernard, F-78180 Montigny Le Bretonneux (FR)
(86) Numéro de dépôt international: PCT/EP2013/071974
(87) Numéro de publication internationale: WO 2014/079634

(56) Documents cités:
- DE-A1- 4 016 207
- DE-A1-102004 026 833
- FR-A1- 2 811 263
- FR-A1- 2 910 962
- US-A- 5 612 671
- US-A- 5 717 376
- US-A1- 2003 131 657
- US-B1- 6 222 444

## Description

L'invention a pour domaine technique la surveillance d'un véhicule automobile et plus particulièrement la surveillance de la pression des pneumatiques d'un tel véhicule.

Une nouvelle réglementation européenne impose à tous les constructeurs automobiles d'équiper leurs véhicules d'une surveillance de la pression des pneumatiques

Toutefois, il est nécessaire de vérifier la fiabilité des données fournies par les capteurs afin de générer, ou pas, une alerte. Pour réaliser cela, il est nécessaire de disposer d'une détection robuste d'une défaillance et d'incohérences de données d'un capteur de pression de roue.

En d'autres termes, il doit être possible de détecter une défaillance provenant des données fournies par les capteurs de pression pneumatique.

Il doit également être possible de réaliser la surveillance de la pression des pneumatiques de façon synergétique avec la surveillance des autres organes du véhicule.

En particulier, une estimation doit pouvoir être disponible, pour chaque pneumatique, du niveau de pression, de la température, de niveau de charge de la batterie alimentant les capteurs, des paramètres du mouvement du pneumatique ainsi que de la validité de chacun des signaux associés à ces estimations.

De l'état de la technique, on connaît le document FR 2916564, le document FR 2844748 et le document GB 2443302 qui divulguent diverses méthodes de localisation de la position des roues en utilisant des moyens radiofréquences. La connaissance de la position permet de relier chaque mesure de pression à la roue correspondante. US 6, 222, 444 B1 divulgue une méthode d'analyse statistique de grandeurs mesurées sur la roue en vue d'indiquer le degré de dégonflage. Il apparaît que l'état de la technique ne permet pas de résoudre les problèmes techniques évoqués ci-dessus.

Un objet de l'invention est un procédé de surveillance de la pression des pneumatiques d'un véhicule automobile comprenant au moins un capteur par pneumatique. Le procédé comprend les étapes suivantes :
pour chaque valeur déterminée par un capteur,
on détermine la présence d'une incohérence en fonction de la comparaison de la valeur déterminée par un capteur et de valeurs mémorisées,
on détermine la valeur d'une variable d'état en fonction de la présence d'une incohérence,
on initialise un compteur d'incohérences,
on modifie le compteur d'incohérences avec un pas d'incrémentation en fonction de la valeur de la variable d'état, et
on détermine si une alerte de valeur doit être émise en fonction notamment du niveau du compteur d'incohérences.

On peut déterminer si une alerte générale doit être émise en fonction des alertes de valeur émises pour chaque valeur déterminée par un capteur.

On peut fixer la valeur de la variable d'état à une première valeur, lorsqu'une incohérence est détectée, et on peut fixer la valeur de la variable d'état à une deuxième valeur, lorsqu'aucune incohérence n'a été détectée.

On peut fixer la valeur de la variable d'état à une troisième valeur si une requête de réinitialisation existe ou lors de l'allumage électrique du véhicule.

On peut initialiser un compteur d'incohérences avec la valeur correspondante mémorisée à l'itération précédente.

On peut modifier le compteur d'incohérences avec un pas d'incrémentation positif si la valeur de la variable d'état est une première valeur, et on peut modifier le compteur d'incohérences avec un pas d'incrémentation négatif si la valeur de la variable d'état est une deuxième valeur.

On peut modifier la valeur du pas d'incrément en fonction de l'amplitude de l'incohérence entre la valeur déterminée par un capteur et de valeurs mémorisées.

S'il existe une demande de réinitialisation d'un compteur d'incohérences, le compteur d'incohérences peut prendre la valeur zéro et un incrément neutre peut être appliqué.

Pour déterminer si une alerte de valeur doit être émise,
on peut définir une variable d'état d'alerte de valeur,
on peut initialiser la variable d'état d'alerte de valeur en fonction de la dernière valeur de la variable d'état d'alerte de valeur mémorisée.

Si la valeur de la variable d'état d'alerte de valeur est à une première valeur et que le compteur d'incohérences correspondant est à zéro, on peut fixer la variable d'état d'alerte de valeur à une deuxième valeur.

Si le compteur d'incohérences correspondant a atteint la valeur maximale autorisée, on peut fixer la variable d'état d'alerte de valeur à une troisième valeur et on émet une alerte portant sur la valeur mesurée.

S'il existe une demande de réinitialisation de l'état d'alerte de valeur, on peut fixer la valeur de la variable d'état d'alerte de valeur à une première valeur.

Pour déterminer si une alerte générale doit être émise en fonction des alertes de valeur émises, on peut définir une variable d'état d'alerte générale, on peut initialiser la variable d'état d'alerte générale en fonction de la dernière valeur de la variable d'état d'alerte générale mémorisée.

Si toutes les variables d'état d'alerte de valeur sont à la deuxième valeur, on peut fixer l'état d'alerte générale à une deuxième valeur, et si au moins une variable d'état d'alerte de valeur est à la troisième valeur, on peut fixer l'état d'alerte générale à une troisième valeur et on émet une alerte générale concernant le capteur.

S'il existe une demande de réinitialisation de l'état d'alerte générale, on peut fixer la valeur de la variable d'état d'alerte générale à une première valeur.

Lors de l'arrêt électrique du véhicule, on peut mémoriser la valeur de l'état d'alerte générale ainsi que pour chaque valeur déterminée par un capteur, la valeur du compteur d'incohérences et la valeur de la variable d'état d'alerte de valeur,
si la variable d'état d'alerte de valeur est à une troisième valeur, on peut mémoriser la valeur du compteur d'incohérences minorée d'une unité, on mémorise la valeur de la variable d'état d'alerte de valeur comme égale à une quatrième valeur, et
si la variable d'état d'alerte générale est à une troisième valeur, on peut mémoriser la valeur de la variable d'état d'alerte générale comme égale à une quatrième valeur.

Un autre objet de l'invention est un système de surveillance de pression des pneumatiques d'un véhicule automobile comprenant au moins un capteur par pneumatique. Les capteurs sont reliés à un moyen d'association des informations aux roues connecté à un moyen de diagnostic du système de surveillance lui-même relié à un moyen d'information. Le moyen de diagnostic comprend :
pour chaque valeur déterminée par un capteur,
un moyen de détermination d'incohérence apte à déterminer l'existence d'une incohérence en fonction de la mesure considérée provenant d'un capteur provenant du moyen d'association des informations aux roues et de valeurs mémorisées,
un moyen de comptage d'incohérences apte à initialiser et à modifier un compteur interne, dit compteur d'incohérences, avec un pas d'incrémentation positif, négatif, ou neutre en fonction de la valeur d'état déterminée par le moyen de détermination d'incohérences,
un moyen de détermination d'alerte de valeur apte à émettre une alerte de valeur si la valeur reçue du moyen de comptage d'incohérences est supérieure à une valeur de seuil mémorisée.

Le moyen de diagnostic peut comprendre un moyen de détermination d'alerte générale apte à émettre une alerte générale à destination du moyen d'information s'il existe au moins une alerte de valeur provenant d'un des moyens de détermination d'alerte de valeur.

Chaque capteur peut être apte à déterminer au moins une valeur relative au pneumatique, notamment la pression et la température du pneumatique, l'accélération et le sens de rotation du pneumatique, ainsi que le statut de la batterie, le type d'émission et l'existence d'un problème interne tous trois liés à un capteur.

D'autres buts, caractéristiques et avantages apparaîtront à la lecture de la description suivante donnée uniquement en tant qu'exemple non limitatif et faite en référence aux figures annexées sur lesquelles :
- la figure 1 illustre de façon générale les principaux éléments du système de surveillance de la pression des pneumatiques,
- la figure 2 illustre de façon détaillée les principaux éléments du système de surveillance de la pression des pneumatiques,
- la figure 3 illustre les principales étapes du procédé de commande d'un système de surveillance de la pression des pneumatiques.

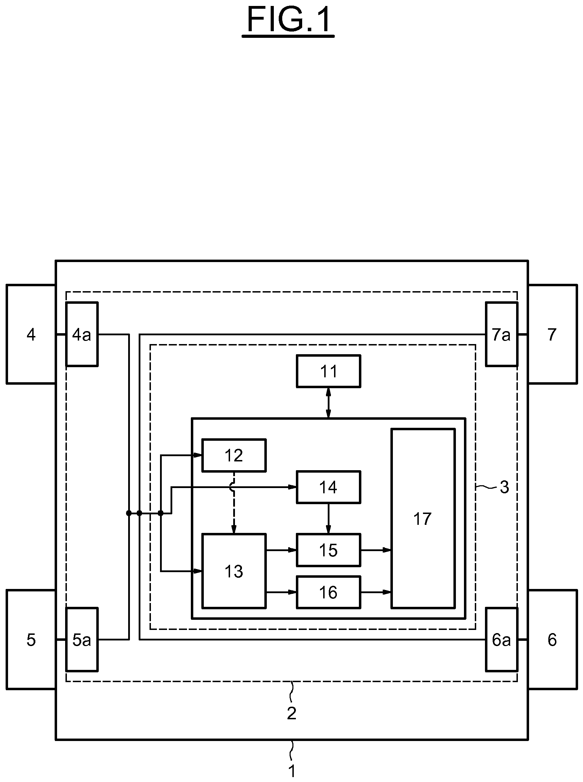

Sur la figure 1, on peut voir un véhicule 1 comprenant un système de surveillance 2 de pression des pneus permettant d'informer les utilisateurs et les autres systèmes du véhicule de l'état des pneumatiques. Le système de surveillance 2 de pression comprend une unité de commande électronique 3 couplée à au moins un capteur 4a,5a,6a,7a situé dans chaque pneumatique 4,5,6,7. Le couplage peut être réalisé par une liaison filaire ou sans fil. Le système de surveillance 2 de pression transmet notamment des informations relatives à la pression d'au moins un des pneumatiques du véhicule, à l'état de sous-gonflement d'au moins un des pneumatiques, à l'état de crevaison d'au moins un des pneumatiques, de la défaillance ou de l'absence d'un capteur de pression d'au moins un des pneumatiques, d'une défaillance du récepteur, ou de l'absence d'au moins une des données nécessaires au fonctionnement du système de surveillance 2 de pression des pneus.

Le système de surveillance 2 de pression est modulaire dans la mesure où d'autres moyens de détermination peuvent être ajoutés pour fournir des informations complémentaires aux informations décrites ci-dessus à partir des données de pression des capteurs 4a,5a,6a,7a et éventuellement de données fournies par d'autres dispositifs du véhicule. Les capteurs 4a,5a,6a,7a fournissent chacun la pression du pneumatique associé, mais également la température voire la vitesse de rotation du pneumatique. D'autres informations peuvent également être communiquées par ces capteurs 4a,5a,6a,7a.

Le système de surveillance 2 de pression comprend un moyen de supervision 11, un moyen de détection 12 des identifiants des roues, un moyen d'association 13 des informations aux roues, un moyen de construction 14 des seuils de pression, un moyen principal 15, un moyen de diagnostic 16 du système de surveillance, et un moyen d'information 17.

Le moyen de supervision 11 est apte à activer ou désactiver les autres moyens 12,13,14,15,16,17 du système de surveillance 2 de pression.

Il reçoit en entrée les différentes informations de roulage disponibles, notamment la vitesse du véhicule, la charge en kilogrammes du véhicule, l'état d'injection du moteur, ainsi que les différentes informations reçues des différents moyens compris dans le système de surveillance 2 de pression de la pression des pneumatiques.

Pour chaque moyen commandé, le moyen de supervision 11 émet une commande pouvant prendre trois états, moyen activé, moyen désactivé ou moyen remis à zéro.

Le moyen de détection 12 des identifiants des roues reçoit en entrée les informations transmises par les capteurs 4a,5a,6a,7a de roues ainsi que des informations relatives aux conditions de roulage du véhicule.

Le moyen de détection 12 des identifiants des roues est apte à associer un des identifiants de transmission reçus à chacune des roues 4,5,6,7. Pour cela, il associe les identifiants à chaque roue 4,5,6,7 en fonction d'une table de correspondance mémorisée. Alternativement, le moyen de détection 12 des identifiants de roues peut comprendre plusieurs tables de correspondance, chaque table est alors associée à un jeu de pneumatiques différents, par exemple un jeu de pneumatiques pour l'été ou un jeu de pneumatiques pour l'hiver. Alternativement, le moyen de détection 12 des identifiants des roues peut être apte à localiser automatiquement les pneumatiques 4,5,6,7 par apprentissage en corrélant les données disponibles aux signaux reçus.

En sortie, le moyen de détection 12 des identifiants de roues émet un signal d'identification par roue du véhicule, chaque signal d'identification portant la correspondance entre la position de la roue dans le véhicule et l'identifiant de transmission associé. Alternativement, le moyen de détection 12 des identifiants de roues émet un signal de changement associé au signal d'identification indiquant la détection d'un identifiant de transmission ne faisant pas partie des tables de correspondance prédéterminées ou apprises.

Le moyen d'association 13 des informations aux roues reçoit en entrée les informations du moyen de détection 12 des identifiants de roues et les informations transmises par les capteurs 4a,5a,6a,7a de roue. Le moyen d'association émet en sortie les informations transmises par les capteurs 4a,5a,6a,7a de roue associées aux roues correspondantes.

Le moyen de construction 14 des seuils de pression détermine des seuils de pression pour chaque roue en fonction des températures mesurées pour chaque roue et d'une table de pressions recommandées par le constructeur. Les pressions recommandées sont données à une température de référence, quelle que soit la roue. Pour obtenir les seuils de pression, on applique par exemple la loi de Mariotte aux pressions recommandées en fonction de la température mesurée. Le moyen de construction émet en sortie un seuil pour chaque roue. Alternativement, les seuils peuvent être calculés pour différentes plages de vitesses, par exemple, un jeu de seuils à basse vitesse et un jeu de seuils à haute vitesse.

Le moyen principal 15 comprend un ensemble de moyens élémentaires aptes chacun à déterminer une situation du véhicule lié à l'état de ses pneumatiques. Les moyens élémentaires peuvent permettre de déterminer par exemple un sous-gonflage, une crevaison, une pression de gonflage inadaptée à un mode de conduite, ou une pression de gonflage inadaptée à la charge du véhicule. Les différents états sont déterminés pour chaque pneumatique.

Chaque moyen élémentaire émet en sortie un signal d'état à deux valeurs, l'une pour un état présent, l'autre pour un état absent. Chaque moyen élémentaire a accès à toutes les données disponibles au système de surveillance 2 de pression de la pression des pneumatiques, notamment aux informations transmises par les capteurs 4a,5a,6a,7a de roue.

Le moyen de diagnostic 16 du système de surveillance reçoit les informations transmises par les capteurs 4a,5a,6a,7a et les analyse afin de déterminer la présence de incohérences dues à des défaillances. Pour cela, le moyen de diagnostic 16 réalise une corrélation entre les informations transmises par les capteurs 4a,5a,6a,7a et les informations précédemment transmises par ces capteurs ou avec des mesures correspondantes reçues d'autres organes. Par exemple, pour déterminer une discordance dans les informations de mouvement, on compare les informations de vitesse reçues d'un dispositif ABS , ESP (pour Electronic Stability Program) ou autre dispositif aux informations reçues des capteurs de mouvement de chaque roue.

Les entrées du moyen de diagnostic 16 diffèrent selon les informations dont on souhaite déterminer les discordances. D'une façon générale, le moyen de diagnostic 16 dispose d'un accès à toutes les informations reçues des capteurs 4a,5a,6a,7a de roues, ainsi que des informations disponibles auprès des autres capteurs 4a,5a,6a,7a et moyens d'estimation. Le moyen de diagnostic 16 émet en sortie un signal de défaillance pour chaque capteur 4a,5a,6a,7a de chaque roue, ou pour chaque mesure de chaque capteur 4a,5a,6a,7a. Ce signal peut être notamment un signal booléen à deux états indiquant un capteur défaillant ou un capteur non défaillant.

Le moyen d'information 17 permet de transmettre les informations de défaillance ou d'anomalie des différents moyens à l'unité de commande électronique 3 du véhicule et/ou au conducteur. Dans ce dernier cas, le moyen d'information 17 interagit avec une interface homme machine, tel que le tableau de bord, afin d'informer explicitement le conducteur.

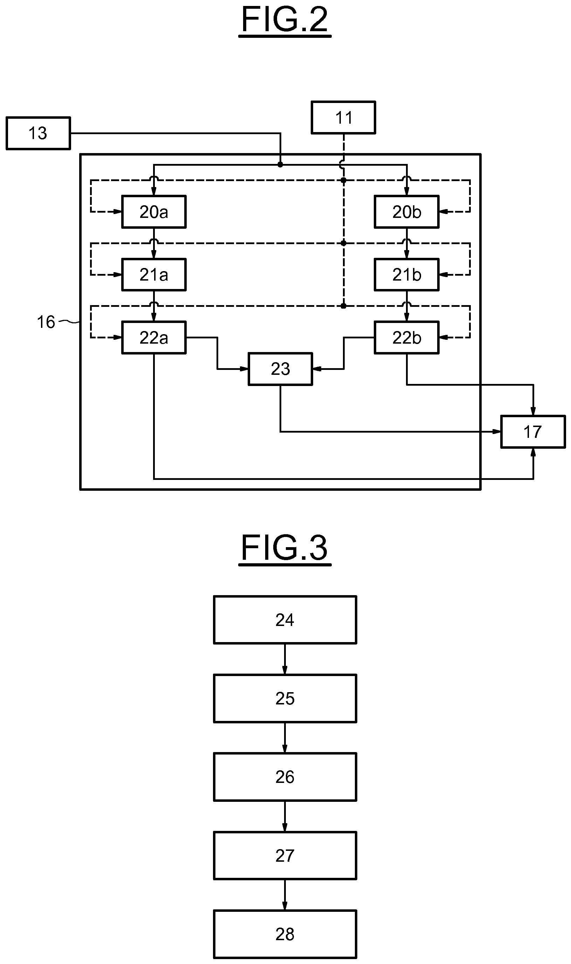

Sur la figure 2, on peut voir les principaux éléments du système de surveillance 2 de la pression des pneumatiques.

Comme décrit de façon générale en relation avec la figure 1, le système de surveillance 2 de la pression des pneumatiques comprend des capteurs 4a,5a,6a,7a de roue reliés à un moyen d'association 13 des informations aux roues connecté à un moyen de diagnostic 16 du système de surveillance lui-même relié à un moyen d'information 17. Le système de surveillance 2 de la pression des pneumatiques comprend également un moyen de supervision 11 apte à activer, désactiver ou réinitialiser les différents moyens du système de surveillance.

Chaque capteur 4a,5a,6a,7a est apte à déterminer au moins une valeur relative au pneumatique, telle que par exemple la pression et la température d'un pneumatique 4,5,6,7, l'accélération et le sens de rotation d'une roue, ainsi que le statut de la batterie, le type d'émission et l'existence d'un problème interne tous trois liés à un capteur 4a,5a,6a,7a.

Le moyen de diagnostic 16 du système de surveillance est apte à détecter une incohérence dans les signaux issus des capteurs 4a,5a,6a,7a de roue et à transmettre une alerte concernant une valeur mesurée par un capteur 4a,5a,6a,7a, et/ou une alerte générale concernant tout ou partie des capteurs 4a,5a,6a,7a.

Le moyen de diagnostic 16 comprend un moyen de détermination 20a,20b d'incohérence, un moyen de comptage 21a,21b d'incohérence, un moyen de détermination 22a,22b d'alerte de valeur et un moyen de détermination 23 d'alerte générale.

Le premier moyen de détermination 20a d'incohérence, le premier moyen de comptage 21a d'incohérence, le premier moyen de détermination 22a d'alerte de valeur reçoivent et traitent des informations relatives à une première mesure provenant d'un des capteurs 4a,5a,6a,7a de roue. Le deuxième moyen de détermination 20b d'incohérence, le deuxième moyen de comptage 21b d'incohérence, le deuxième moyen de détermination 22b d'alerte de valeur reçoivent et traitent des informations relatives à une deuxième mesure provenant d'un des capteurs 4a,5a,6a,7a de roue. En d'autres termes, il existe un moyen de détermination d'incohérence, un moyen de comptage d'incohérence et un moyen de détermination d'alerte de valeur pour chaque valeur mesurée par chaque capteur 4a,5a,6a,7a de roue. De même, il existe soit un moyen de détermination 23 d'alerte générale pour chaque capteur 4a,5a,6a,7a soit un unique moyen de détermination 23 d'alerte générale pour le système dans son ensemble.

Le moyen de détermination 20a,20b d'incohérence est relié en entrée au moyen d'association 13 des informations aux roues et en sortie au moyen de comptage 21a,21b d'incohérence.

Le moyen de détermination 20a,20b d'incohérence est apte à déterminer l'existence d'une incohérence en fonction de la mesure considérée provenant d'un capteur 4a,5a,6a,7a provenant du moyen d'association 13 des informations aux roues et de valeurs mémorisées. Les valeurs mémorisées peuvent être des valeurs précédentes provenant du capteur, ou des valeurs extrêmes attendues pour la mesure considérée, ou une valeur de seuil pour un écart mesuré en fonction de règles prédéterminées.

Le moyen de détermination 20a,20b d'incohérence émet en sortie une variable d'état prenant une première valeur « état incohérent », lorsqu'une incohérence a été détectée et une deuxième valeur « état cohérent », lorsqu'aucune incohérence n'a été détectée lors de l'exécution précédente.

Le moyen de comptage 21a,21b d'incohérence est relié en entrée au moyen d'association 13 des informations aux roues et en sortie au moyen de détermination 22a,22b d'alerte de valeur.

Le moyen de comptage 21a,21b d'incohérence qui est apte à initialiser et à modifier un compteur interne, dit compteur d'incohérence, avec un pas d'incrémentation positif, négatif, ou neutre en fonction de la valeur d'état déterminée par le moyen de détermination 20a,20b d'incohérence. Le moyen de comptage 21a,21b d'incohérence émet en sortie la valeur actuelle de son compteur interne.

Le moyen de détermination 22a,22b d'alerte de valeur est relié en entrée au moyen de comptage 21a,21b d'incohérence et en sortie au moyen de détermination 23 d'alerte générale ainsi qu'au moyen d'information 17.

Le moyen de détermination 22a,22b d'alerte de valeur compare la valeur reçue du moyen de comptage 21a,21b d'incohérence à une valeur de seuil mémorisée. Le moyen de détermination 22a,22b d'alerte de valeur émet une alerte de valeur si la valeur reçue du moyen de comptage 21a,21b d'incohérence est supérieure à la valeur de seuil mémorisée. L'alerte est émise à destination du moyen de détermination 23 d'alerte générale et du moyen d'information 17

Le moyen de détermination 23 d'alerte générale est relié en entrée aux moyens de détermination 22a, 22b d'alerte de valeur et en sortie au moyen d'information 17.

Le moyen de détermination 23 d'alerte générale reçoit les alertes émises par chacun des moyens de détermination 22a,22b d'alerte de valeur. S'il existe au moins une alerte d'un des moyens de détermination 22a,22b d'alerte de valeur, le moyen de détermination 23 d'alerte générale émet une alerte à destination du moyen d'information 17.

S'il n'existe aucune alerte d'un des moyens de détermination 22a,22b d'alerte de valeur, le moyen de détermination 23 d'alerte générale n'émet pas d'alerte à destination du moyen d'information 17.

Le moyen de supervision 11 est relié à chacun des moyens de détermination 20a,20b d'incohérence, des moyens de comptage 21a,21b d'incohérence, des moyens de détermination 22a,22b d'alerte de valeur et au moyen de détermination 23 d'alerte générale. Le moyen de supervision 11 peut émettre un signal de réinitialisation à destination de chacun ou de tous les différents moyens cités ci-dessus.

Les règles de réinitialisation appliquées dans un tel cas seront abordées plus en détail ci-après en relation avec la description de la figure 3. De même, les règles d'initialisation et les règles à appliquer en cas d'arrêt électrique du système de commande seront décrites ci-après.

La figure 3 représente les principales étapes du procédé de commande du système de surveillance 2 de la pression des pneumatiques. Le procédé de commande permet de déterminer si une valeur mesurée est incohérente, et, si tel est le cas, de le signaler aux autres organes du véhicule ainsi qu'au conducteur.

Une incohérence peut être détectée pour chaque valeur déterminée par un capteur 4a,5a,6a,7a, par exemple la pression et la température d'un pneumatique 4,5,6,7, l'accélération et le sens de rotation d'une roue, ainsi que le statut de la batterie, le type d'émission et l'existence d'un problème interne tous trois liés à un capteur 4a,5a,6a,7a.

Au cours d'une première étape 24 du procédé, on vérifie les conditions nécessaires d'incohérences pour chaque valeur déterminée par un capteur 4a,5a,6a,7a. Pour cela, pour chaque valeur déterminée par un capteur 4a,5a,6a,7a, on compare la valeur émise soit à une ou plusieurs des valeurs précédentes, soit à des valeurs prédéterminées, soit à une combinaison des deux. En fonction du résultat de la comparaison, on détermine la présence ou de l'absence d'une incohérence.

Par exemple, un problème d'incohérence est identifié en déterminant l'écart, en valeur absolue, entre la valeur actuelle de la pression d'un pneumatique et la valeur précédente mémorisée et en déterminant que l'écart obtenu n'est pas supérieur à un seuil prédéfini. Le seuil prédéfini dépend de la valeur mesurée par un capteur considérée. Ainsi, il pourra exister un seuil pour la température, et un autre seuil pour la pression. D'autres règles de comparaisons peuvent être employées, par exemple en comparant le taux de variation entre la valeur actuelle et la valeur prédéfinie à un taux de variation maximum.

Pour chaque valeur déterminée par un capteur 4a,5a,6a,7a, on procède à l'initialisation de la situation d'incohérence en définissant une variable d'état pouvant prendre plusieurs valeurs distinctes, comprenant notamment « état incohérent », « état cohérent » et « état non contrôlé ».

Pour chaque valeur déterminée par un capteur 4a,5a,6a,7a, la variable d'état prend la première valeur « état incohérent », lorsqu'une incohérence a été détectée précédemment. Par incohérence précédemment détectée, on comprendra que le procédé fait l'objet d'une exécution périodique, la détection d'une incohérence d'une exécution à la suivante fait l'objet d'une mémorisation.

De manière similaire, pour chaque valeur déterminée par un capteur 4a,5a,6a,7a, la variable d'état prend la deuxième valeur « état cohérent », lorsqu'aucune incohérence n'a été détectée lors de l'exécution précédente.

Pour chaque valeur déterminée par un capteur 4a,5a,6a,7a, la variable d'état prend la troisième valeur « état non contrôlé » si une requête de réinitialisation existe. La variable d'état prend également la troisième valeur « état non contrôlé » lors de l'allumage électrique du véhicule.

Le procédé se poursuit ensuite à la deuxième étape 25 au cours de laquelle on initialise un compteur d'incohérences, pour chaque valeur déterminée par un capteur 4a,5a,6a,7a. Pour cela, on initialise chaque compteur avec la valeur correspondante mémorisée à l'itération précédente. Toutefois, s'il existe une demande de réinitialisation d'un compteur d'incohérences, ce compteur prend la valeur zéro.

Au cours d'une troisième étape 26 du procédé, pour chaque valeur déterminée par un capteur 4a,5a,6a,7a, on modifie le compteur d'incohérences avec un pas d'incrémentation positif, négatif, ou neutre en fonction de la valeur d'état déterminée à la première étape 24. La valeur du pas d'incrément peut également varier selon la criticité d'un évènement et des règles prédéterminées.

Par exemple, pour chaque valeur déterminée par un capteur 4a,5a,6a,7a, un incrément neutre est appliqué si une requête de réinitialisation existe. Ainsi, la valeur réinitialisée du compteur d'incohérences n'est pas modifiée lors de l'itération en cours du procédé.

Pour chaque valeur déterminée par un capteur 4a,5a,6a,7a, un incrément positif est appliqué si la valeur de la variable d'état est égale à la première valeur « état incohérent ».

Enfin, pour chaque valeur déterminée par un capteur 4a,5a,6a,7a, un incrément négatif est appliqué si la valeur de la variable d'état est à la deuxième valeur « état cohérent ».

Au cours d'une quatrième étape 27, on détermine, pour chaque valeur déterminée par un capteur 4a,5a,6a,7a, si une alerte de valeur doit être émise en fonction notamment du niveau du compteur d'incohérence. On définit une variable d'état d'alerte pour chaque valeur déterminée par un capteur 4a,5a,6a,7a, pouvant prendre notamment les valeurs « Warning Not Defined » (alerte non encore définie), « Warning Off » (alerte désactivée), « Warning On » (alerte activée), « Warning On Disable » (alerte activée muette).

On initialise l'état d'alerte de valeur en fonction de la dernière valeur d'alerte de valeur mémorisée. Toutefois, s'il existe une demande de réinitialisation de l'état d'alerte de valeur, on fixe l'état d'alerte de valeur à une première valeur « Warning Not Defined ».

Si l'état d'alerte de valeur est à la première valeur « Warning Not Defined » et que le compteur d'incohérences est à zéro, on fixe l'état d'alerte de valeur à la deuxième valeur « Warning Off ».

Si le compteur d'incohérences a atteint la valeur maximale autorisée, on fixe l'état d'alerte de valeur à la troisième valeur « Warning On ».

Dans les autres cas, on conserve l'état d'alerte de valeur actuellement en cours.

Au cours d'une cinquième étape 28, on détermine si une alerte générale doit être émise en fonction des alertes de valeur émises.

On définit une variable d'état d'alerte générale, pouvant prendre notamment les valeurs « Warning Not Defined » (alerte non encore définie), « Warning Off » (alerte désactivée), « Warning On » (alerte activée), « Warning On Disable » (alerte activée muette).

On initialise l'état d'alerte générale en fonction de la dernière valeur d'alerte générale mémorisée. Toutefois, s'il existe une demande de réinitialisation de l'état d'alerte générale, on fixe l'état d'alerte générale à une première valeur « Warning Not Defined ».

Si au moins une alerte de valeur est à la troisième valeur « Warning On », on fixe l'état d'alerte générale à une troisième valeur « Warning On ».

Si toutes les alertes de valeur sont à la deuxième valeur « Warning Off », on fixe l'état d'alerte générale à une deuxième valeur « Warning Off ».

Dans les autres cas, on conserve l'état d'alerte générale actuellement en cours.

Lors de l'arrêt électrique du système de surveillance de la pression des pneumatiques exécutant le procédé, on mémorise la valeur de l'état d'alerte générale ainsi que pour chaque valeur déterminée par un capteur 4a,5a,6a,7a, la valeur du compteur d'incohérences et la valeur de l'état d'alerte.

Toutefois, pour chaque valeur déterminée par un capteur 4a,5a,6a,7a, si une alerte d'incohérence est en cours lors de l'arrêt électrique, on mémorise la valeur du compteur d'incohérences minorée d'une unité. Ainsi, lors de la reprise électrique du système, une erreur d'incohérence n'est pas immédiatement déclenchée.

De même, pour chaque valeur déterminée par un capteur 4a,5a,6a,7a, si un état d'alerte de valeur est à la troisième valeur « Warning On » lors d'un arrêt électrique, on mémorise une quatrième valeur « Warning On Disable ». Ainsi, lors de la reprise électrique du système, une alerte pour cette valeur n'est pas immédiatement déclenchée.

Enfin, si l'état d'alerte générale est à la troisième valeur « Warning On » lors d'un arrêt électrique, on mémorise une quatrième valeur « Warning On Disable ». Ainsi, lors de la reprise électrique du système, une alerte générale n'est pas immédiatement déclenchée.

## Revendications

1. Procédé de surveillance de la pression des pneumatiques d'un véhicule automobile comprenant au moins un capteur (4a,5a,6a,7a) par pneumatique (4,5,6,7) **caractérisé par le fait qu'**il comprend les étapes suivantes :
pour chaque valeur déterminée par un capteur (4a,5a,6a,7a),
on détermine la présence d'une incohérence en fonction de la comparaison de la valeur déterminée par un capteur (4a,5a,6a,7a) et de valeurs mémorisées,
on détermine la valeur d'une variable d'état en fonction de la présence d'une incohérence,
on initialise un compteur d'incohérences,
on modifie le compteur d'incohérences avec un pas d'incrémentation en fonction de la valeur de la variable d'état, et
on détermine si une alerte de valeur doit être émise en fonction notamment du niveau du compteur d'incohérence.

2. Procédé de surveillance selon la revendication 1, dans lequel
on détermine si une alerte générale doit être émise en fonction des alertes de valeur émises pour chaque valeur déterminée par un capteur (4a,5a,6a,7a).

3. Procédé de surveillance selon l'une quelconque des revendications 1 ou 2, dans lequel
on fixe la valeur de la variable d'état à une première valeur, lorsqu'une incohérence est détectée, et
on fixe la valeur de la variable d'état à une deuxième valeur, lorsqu'aucune incohérence n'a été détectée.

4. Procédé de surveillance selon l'une quelconque des revendications 1 ou 2, dans lequel on fixe la valeur de la variable d'état à une troisième valeur si une requête de réinitialisation existe ou lors de l'allumage électrique du véhicule.

5. Procédé de surveillance selon l'une quelconque des revendications 1 à 4, dans lequel on initialise un compteur d'incohérences avec la valeur correspondante mémorisée à l'itération précédente.

6. Procédé de surveillance selon la revendication 5, dans lequel on modifie le compteur d'incohérences avec un pas d'incrémentation positif si la valeur de la variable d'état est une première valeur, et on modifie le compteur d'incohérences avec un pas d'incrémentation négatif si la valeur de la variable d'état est une deuxième valeur.

7. Procédé de surveillance selon la revendication 6, dans lequel on modifie la valeur du pas d'incrément en fonction de l'amplitude de l'incohérence entre la valeur déterminée par un capteur (4a,5a,6a,7a) et de valeurs mémorisées.

8. Procédé de surveillance selon l'une quelconque des revendications 5 à 7, dans lequel, s'il existe une demande de réinitialisation d'un compteur d'incohérence, le compteur d'incohérences prend la valeur zéro et un incrément neutre est appliqué.

9. Procédé de surveillance selon l'une quelconque des revendications 5 à 8, dans lequel, pour déterminer si une alerte de valeur doit être émise,
on définit une variable d'état d'alerte de valeur,
on initialise la variable d'état d'alerte de valeur en fonction de la dernière valeur de la variable d'état d'alerte de valeur mémorisée,
si la valeur de la variable d'état d'alerte de valeur est à une première valeur et que le compteur d'incohérences correspondant est à zéro, on fixe la variable d'état d'alerte de valeur à une deuxième valeur, et
si le compteur d'incohérences correspondant a atteint la valeur maximale autorisée, on fixe la variable d'état d'alerte de valeur à une troisième valeur et on émet une alerte portant sur la valeur mesurée.

10. Procédé de surveillance selon la revendication 9, dans lequel, s'il existe une demande de réinitialisation de l'état d'alerte de valeur, on fixe la valeur de la variable d'état d'alerte de valeur à une première valeur.

11. Procédé de surveillance selon l'une quelconque des revendications 9 ou 10, dans lequel, pour déterminer si une alerte générale doit être émise en fonction des alertes de valeur émises,
on définit une variable d'état d'alerte générale,
on initialise la variable d'état d'alerte générale en fonction de la dernière valeur de la variable d'état d'alerte générale mémorisée,
si toutes les variable d'état d'alerte de valeur sont à la deuxième valeur, on fixe l'état d'alerte générale à une deuxième valeur, et
si au moins une variable d'état d'alerte de valeur est à la troisième valeur, on fixe l'état d'alerte générale à une troisième valeur et on émet une alerte générale concernant le capteur.

12. Procédé de surveillance selon la revendication 11, dans lequel, s'il existe une demande de réinitialisation de l'état d'alerte générale, on fixe la valeur de la variable d'état d'alerte générale à une première valeur.

13. Procédé de surveillance selon l'une quelconque des revendications 1 à 12, dans lequel, lors de l'arrêt électrique du système de surveillance de la pression des pneumatiques,
on mémorise la valeur de l'état d'alerte générale ainsi que pour chaque valeur déterminée par un capteur (4a,5a,6a,7a), la valeur du compteur d'incohérences et la valeur de la variable d'état d'alerte de valeur,
si la variable d'état d'alerte de valeur est à une troisième valeur, on mémorise la valeur du compteur d'incohérences minorée d'une unité, on mémorise la valeur de la variable d'état d'alerte de valeur comme égale à une quatrième valeur, et
si la variable d'état d'alerte générale est à une troisième valeur, on mémorise la valeur de la variable d'état d'alerte générale comme égale à une quatrième valeur.

14. Système de surveillance de pression des pneumatiques d'un véhicule automobile comprenant au moins un capteur (4a,5a,6a,7a) par pneumatique (4,5,6,7), dans lequel
les capteurs (4a,5a,6a,7a) sont reliés à un moyen d'association (13) des informations aux roues connecté à un moyen de diagnostic (16) du système de surveillance lui-même relié à un moyen d'information (17),
le moyen de diagnostic (16) étant **caractérisé par** les moyens suivants :
pour chaque valeur déterminée par un capteur (4a,5a,6a,7a),
un moyen de détermination (20a,20b) d'incohérence apte à déterminer l'existence d'une incohérence en fonction de la mesure considérée provenant d'un capteur (4a,5a,6a,7a) provenant du moyen d'association (13) des informations aux roues et de valeurs mémorisées,
un moyen de comptage (21a,21b) d'incohérences apte à initialiser et à modifier un compteur interne, dit compteur d'incohérences, avec un pas d'incrémentation positif, négatif, ou neutre en fonction de la valeur d'état déterminée par le moyen de détermination (20a,20b) d'incohérence, et
un moyen de détermination (22a,22b) d'alerte de valeur apte à émettre une alerte de valeur si la valeur reçue du moyen de comptage (21a,21b) d'incohérences est supérieure à une valeur de seuil mémorisée.

15. Système de surveillance selon la revendication 14, dans lequel le moyen de diagnostic (16) comprend également un moyen de détermination (23) d'alerte générale apte à émettre une alerte générale à destination du moyen d'information (17) s'il existe au moins une alerte de valeur provenant d'un des moyens de détermination (22a,22b) d'alerte de valeur.

16. Système de surveillance selon l'une quelconque des revendications 14 ou 15, dans lequel chaque capteur (4a,5a,6a,7a) est apte à déterminer au moins une valeur relative au pneumatique (4,5,6,7), notamment la pression et la température du pneumatique (4,5,6,7), l'accélération et le sens de rotation du pneumatique (4,5,6,7), ainsi que le statut de la batterie, le type d'émission et l'existence d'un problème interne tous trois liés à un capteur (4a,5a,6a,7a).

## Patentansprüche

1. Verfahren zur Überwachung des Drucks der Luftreifen eines Kraftfahrzeugs, das mindestens einen Sensor (4a,5a,6a,7a) pro Luftreifen (4,5,6,7) enthält, **dadurch gekennzeichnet, dass** es die folgenden Schritte enthält:
für jeden von einem Sensor (4a,5a,6a,7a) bestimmten Wert
wird das Vorhandensein einer Inkohärenz abhängig vom Vergleich des von einem Sensor (4a, 5a, 6a, 7a) bestimmten Werts und gespeicherten Werten bestimmt,
wird der Wert einer Zustandsvariablen abhängig vom Vorhandensein einer Inkohärenz bestimmt,
wird ein Inkohärenzzähler initialisiert,
wird der Inkohärenzzähler mit einem Inkrementierungsschritt abhängig vom Wert der Zustandsvariablen verändert, und
wird bestimmt, ob eine Wertwarnung gesendet werden muss, abhängig insbesondere vom Pegel des Inkohärenzzählers.

2. Überwachungsverfahren nach Anspruch 1, wobei abhängig von den für jeden von einem Sensor (4a,5a,6a,7a) bestimmten Wert gesendeten Wertwarnungen bestimmt wird, ob eine allgemeine Warnung gesendet werden muss.

3. Überwachungsverfahren nach einem der Ansprüche 1 oder 2, wobei
der Wert der Zustandsvariablen auf einen ersten Wert festgelegt wird, wenn eine Inkohärenz erfasst wird, und
der Wert der Zustandsvariablen auf einen zweiten Wert festgelegt wird, wenn keine Inkohärenz erfasst wurde.

4. Überwachungsverfahren nach einem der Ansprüche 1 oder 2, wobei der Wert der Zustandsvariablen auf einen dritten Wert festgelegt wird, wenn es eine Rücksetzanforderung gibt oder beim elektrischen Zünden des Fahrzeugs.

5. Überwachungsverfahren nach einem der Ansprüche 1 bis 4, wobei ein Inkohärenzzähler mit dem bei der vorhergehenden Iteration gespeicherten entsprechenden Wert initialisiert wird.

6. Überwachungsverfahren nach Anspruch 5, wobei der Inkohärenzzähler mit einem positiven Inkrementierungsschritt verändert wird, wenn der Wert der Zustandsvariablen ein erster Wert ist, und der Inkohärenzzähler mit einem negativen Inkrementierungsschritt verändert wird, wenn der Wert der Zustandsvariablen ein zweiter Wert ist.

7. Überwachungsverfahren nach Anspruch 6, wobei der Wert des Inkrementierungsschritts abhängig von der Amplitude der Inkohärenz zwischen dem von einem Sensor (4a,5a,6a,7a) bestimmten Wert und gespeicherten Werten verändert wird.

8. Überwachungsverfahren nach einem der Ansprüche 5 bis 8, wobei, wenn es eine Rücksetzanforderung eines Inkohärenzzählers gibt, der Inkohärenzzähler den Wert Null annimmt und ein neutrales Inkrement angewendet wird.

9. Überwachungsverfahren nach einem der Ansprüche 5 bis 8, wobei zur Bestimmung, ob eine Wertwarnung gesendet werden soll,
eine Wertwarnung-Zustandsvariable definiert wird, die Wertwarnung-Zustandsvariable abhängig vom letzten Wert der gespeicherten Wertwarnung-Zustandsvariablen initialisiert wird,
wenn der Wert der Wertwarnung-Zustandsvariablen auf einem ersten Wert und der entsprechende Inkohärenzzähler auf Null ist, die Wertwarnung-Zustandsvariable auf einen zweiten Wert festgelegt wird, und
wenn der entsprechende Inkohärenzzähler den erlaubten maximalen Wert erreicht hat, die Wertwarnung-Zustandsvariable auf einen dritten Wert festgelegt und eine Warnung gesendet wird, die sich auf den gemessenen Wert bezieht.

10. Überwachungsverfahren nach Anspruch 9, wobei, wenn es eine Rücksetzanforderung des Wertwarnungszustands gibt, der Wert der Wertwarnung-Zustandsvariablen auf einen ersten Wert festgelegt wird.

11. Überwachungsverfahren nach einem der Ansprüche 9 oder 10, wobei, um zu bestimmen, ob eine allgemeine Warnung abhängig von den gesendeten Wertwarnungen gesendet werden soll,
eine Zustandsvariable allgemeiner Warnung definiert wird,
die Zustandsvariable allgemeiner Warnung abhängig vom letzten Wert der gespeicherten Zustandsvariablen allgemeiner Warnung initialisiert wird,
wenn alle Wertwarnung-Zustandsvariablen auf dem zweiten Wert sind, der Zustand allgemeiner Warnung auf einen zweiten Wert festgelegt wird, und
wenn mindestens eine Wertwarnung-Zustandsvariable auf dem dritten Wert ist, der Zustand allgemeiner Warnung auf einen dritten Wert festgelegt und eine den Sensor betreffende allgemeine Warnung gesendet wird.

12. Überwachungsverfahren nach Anspruch 11, wobei, wenn es eine Rücksetzanforderung des Zustands allgemeiner Warnung gibt, der Wert der Zustandsvariablen allgemeiner Warnung auf einen ersten Wert festgelegt wird.

13. Überwachungsverfahren nach einem der Ansprüche 1 bis 12, wobei beim elektrischen Ausschalten des Überwachungssystems des Drucks der Luftreifen der Wert des Zustands allgemeiner Warnung sowie für jeden von einem Sensor (4a,5a,6a,7a) bestimmten Wert der Wert des Inkohärenzzählers und der Wert der Wertwarnung-Zustandsvariablen gespeichert werden,
wenn die Wertwarnung-Zustandsvariable auf einem dritten Wert ist, der Wert des Inkohärenzzählers verringert um eine Einheit gespeichert wird, der Wert der Wertwarnung-Zustandsvariablen als gleich einem vierten Wert gespeichert wird, und
wenn die Zustandsvariable allgemeiner Warnung auf einem dritten Wert ist, der Wert der Zustandsvariablen allgemeiner Warnung als gleich einem vierten Wert gespeichert wird.

14. System zur Überwachung des Drucks der Luftreifen eines Kraftfahrzeugs, das mindestens einen Sensor (4a,5a,6a,7a) pro Luftreifen (4,5,6,7) enthält, wobei die Sensoren (4a,5a,6a,7a) mit einer Zuordnungseinrichtung (13) der Informationen zu den Rädern verbunden sind, die an eine Diagnoseeinrichtung (16) des Überwachungssystems angeschlossen ist, das selbst mit einer Informationseinrichtung (17) verbunden ist,
wobei die Diagnoseeinrichtung (16) durch die folgenden Einrichtungen gekennzeichnet ist:
für jeden von einem Sensor (4a, 5a, 6a, 7a) bestimmten Wert,
eine Inkohärenz-Bestimmungseinrichtung (20a,20b), die das Vorhandensein einer Inkohärenz abhängig von der betreffenden Messung bestimmen kann, die von einem Sensor (4a,5a,6a,7a) kommt, die von der Zuordnungseinrichtung (13) der Informationen zu den Rädern und gespeicherten Werten kommt,
eine Zähleinrichtung (21a,21b) von Inkohärenzen, die einen inneren Zähler, Inkohärenzzähler genannt, mit einem positiven, negativen oder neutralen Inkrementierungsschritt abhängig vom von der Inkohärenz-Bestimmungseinrichtung (20a,20b) bestimmten Zustandswert initialisieren und verändern kann, und
eine Wertwarnung-Bestimmungseinrichtung (22a,22b), die eine Wertwarnung senden kann, wenn der von der Zähleinrichtung (21a,21b) von Inkohärenzen empfangene Wert höher als ein gespeicherter Schwellwert ist.

15. Überwachungssystem nach Anspruch 14, wobei die Diagnoseeinrichtung (16) ebenfalls eine Bestimmungseinrichtung (23) allgemeiner Warnung enthält, die eine allgemeine Warnung an die Informationseinrichtung (17) senden kann, wenn es mindestens eine Wertwarnung gibt, die von einer der Wertwarnung-Bestimmungseinrichtungen (22a,22b) kommt.

16. Überwachungssystem nach einem der Ansprüche 14 oder 15, wobei jeder Sensor (4a,5a,6a,7a) mindestens einen Wert bezüglich der Luftreifen (4,5,6,7) bestimmen kann, insbesondere den Druck und die Temperatur des Luftreifens (4,5,6,7), die Beschleunigung und die Drehrichtung des Luftreifens (4,5,6,7), sowie den Status der Batterie, die Art des Sendens und das Vorhandensein eines inneren Problems, die alle drei mit einem Sensor (4a, 5a, 6a, 7a) verbunden sind.

## Claims

1. Method for monitoring the tire pressure of a motor vehicle comprising at least one sensor (4a,5a,6a,7a) per tire (4,5,6,7), **characterized in that** the method comprises the following steps:
determining, for each value determined by a sensor (4a, 5a, 6a, 7a),
the presence of an inconsistency on the basis of the comparison of the value determined by a sensor (4a,5a,6a,7a) and stored values,
determining the value of a state variable on the basis of the presence of an inconsistency,
initializing an inconsistency counter,
modifying the inconsistency counter with an incrementation step on the basis of the value of the state variable, and
determining if a value warning needs to be issued on the basis, in particular, of the level of the inconsistency counter.

2. Monitoring method according to Claim 1, in which
it is determined if a general warning needs to be issued on the basis of the value warnings issued for each value determined by a sensor (4a, 5a, 6a, 7a).

3. Monitoring method according to any one of Claims 1 or 2, in which
the value of the state variable is fixed at a first value when an inconsistency is detected, and
the value of the state variable is fixed at a second value when no inconsistency has been detected.

4. Monitoring method according to any one of Claims 1 or 2, in which the value of the state variable is fixed at a third value if a reset request exists or in the event of electrical switch-on of the vehicle.

5. Monitoring method according to any one of Claims 1 to 4, in which an inconsistency counter is initialized with the corresponding value stored with the previous iteration.

6. Monitoring method according to Claim 5, in which the inconsistency counter is modified with a positive incrementation step if the value of the state variable is a first value, and the inconsistency counter is modified with a negative incrementation step if the value of the state variable is a second value.

7. Monitoring method according to Claim 6, in which the value of the increment step is modified on the basis of the magnitude of the inconsistency between the value determined by a sensor (4a, 5a, 6a, 7a) and stored values.

8. Monitoring method according to any one of Claims 5 to 7, in which, if there is a request to reset an inconsistency counter, the inconsistency counter assumes the value zero and a neutral increment is applied.

9. Monitoring method according to any one of Claims 5 to 8, in which, in order to determine if a value warning needs to be issued,
a value warning state variable is defined,
the value warning state variable is initialized on the basis of the last stored value of the value warning state variable,
if the value of the value warning state variable is at a first value and if the corresponding inconsistency counter is at zero, the value warning state variable is fixed at a second value, and
if the corresponding inconsistency counter has reached the maximum authorized value, the value warning state variable is fixed at a third value, and a warning regarding the measured value is issued.

10. Monitoring method according to Claim 9, in which, if there is a request to reset the value warning state, the value of the value warning state variable is fixed at a first value.

11. Monitoring method according to any one of Claims 9 or 10, in which, in order to determine if a general warning must be issued on the basis of the issued value warnings,
a general warning state variable is defined, and
the general warning state variable is initialized on the basis of the last stored value of the general warning state variable,
if all the value warning state variables are at the second value, the general warning state is fixed at a second value, and
if at least one value warning state variable is at the third value, the general warning state is fixed at a third value and a general warning with regard to the sensor is issued.

12. Monitoring method according to Claim 11, in which, if there is a request to reset the general warning state, the value of the general warning state variable is fixed at a second value.

13. Monitoring method according to any one of Claims 1 to 12, in which, in the event of the electrical stopping of the tire pressure monitoring system,
the general warning state value is stored and also, for each value determined by a sensor (4a, 5a, 6a, 7a), the value of the inconsistency counter and the value of the value warning state variable are stored,
if the value warning state variable is at a third value, the value of the inconsistency counter reduced by a unit is stored and the value of the value warning state variable is stored as equal to a fourth value, and
if the general warning state variable is at a third value, the value of the general warning state variable is stored as equal to a fourth value.

14. System for monitoring the tire pressure of a motor vehicle comprising at least one sensor (4a,5a,6a,7a) per tire (4,5,6,7), in which
the sensors (4a, 5a, 6a, 7a) are connected to a means (13) for associating information with the wheels, said means being connected to a diagnostic means (16) of the monitoring system, in turn connected to an information means (17),
the diagnostic means (16) being **characterized by** the following means:
for each value determined by a sensor (4a, 5a, 6a, 7a),
an inconsistency determination means (20a,20b) able to determine the existence of an inconsistency on the basis of the considered measurement from a sensor (4a, 5a, 6a, 7a) from the means (13) for associating information with the wheels and stored values,
an inconsistency counting means (21a,21b) able to initialize and to modify an internal counter, referred to as an inconsistency counter, with a positive, negative or neutral incrementation step depending on the state value determined by the inconsistency determination means (20a,20b), and
a value warning determination means (22a,22b) able to issue a value warning if the value received from the inconsistency counting means (21a,21b) is greater than a stored threshold value.

15. Monitoring system according to Claim 14, in which the diagnostic means (16) also comprises a general warning determination means (23) able to issue a general warning intended for the information means (17) if there is at least one value warning from one of the value warning determination means (22a,22b).

16. Monitoring system according to any one of Claims 14 or 15, in which each sensor (4a, 5a, 6a, 7a) is able to determine at least one value relating to the tire (4,5,6,7), in particular the pressure and the temperature of the tire (4,5,6,7), the acceleration and the direction of rotation of the tire (4,5,6,7), as well as the status of the battery, the emission type and the existence of an internal problem, all three linked to a sensor (4a,5a,6a,7a).
